Europäisches Patentamt

European Patent Office

Office européen des brevets

(11) Publication number: **0 424 328 A2**

# EUROPEAN PATENT APPLICATION

(21) Application number: **90830427.2**

(22) Date of filing: **28.09.90**

(51) Int. Cl.⁵: **B60J 1/20**

(30) Priority: **18.10.89 IT 2204989**

(43) Date of publication of application:
**24.04.91 Bulletin 91/17**

(84) Designated Contracting States:
**AT BE CH DE DK ES FR GB GR LI LU NL SE**

(71) Applicant: **ITI INDUSTRIALE S.r.L**
**Via Newton, 9**
**I-20016 Pero (Milano)(IT)**

Applicant: **Traspadini, Gianluigi**

Via Streccia 34
I-21040 Venegono Superiore (Varese)(IT)

(72) Inventor: **Traspadini, Gianluigi**
**Via Streccia, 34**
**I-21040 Venegono Sup. (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Driving assembly for motor vehicle sun curtains.**

(57) A driving assembly for motor vehicle curtains comprises at least a driving element, which can be controlled by the driving and in turn controls an electric motor having a revolution reducing unit including a worm aligned with the axis of the electric motor rotor and meshing with a helical gear therewith there is rigid a pignon engaging with two flexible racks provided for sliding in opposite directions and coupled, at the end portions thereof, to a rod associated with curtain fabric material and slidingly guided along the surface to be shielded.

Fig.4

## BACKGROUND OF THE INVENTION

The present invention relates to a driving assembly for driving the sun curtains of a motor vehicle.

As is known, sun curtains are frequently used on motor vehicles for protecting the driver and passengers from the sun rays.

However, a proper driving of a sun curtain for the above mentioned applications is rather difficult mainly as the curtain is arranged in a space provided under the rear window of the motor vehicle, since the driving thereof requires a lot of complex driving operations by the driver or a passenger.

Actually, during these operations, the driver must turn his shoulders and trunk, grasp by a hand the operating lug of the curtain fabric material, engage the top portion of the curtain fabric with restraining means provided in the motor vehicle compartment and so on.

Because of the these difficult operations, the driver is frequently compelled to stop the vehicle, exit the compartment and access the rear portion thereof, in order to properly operate the sun curtain.

Moreover, after use, the sun curtain is frequently left in its use condition which represents a great obstacle during the vehicle parking operations and, because of this reason, the driver is compelled to stop again the vehicle for returning the sun curtain to its inoperative position.

Accordingly, a need arises of automatically operating the sun curtain in motor vehicles in a comparatively easy manner and short time.

Known devices for automatically operating sun curtains in motor vehicle, on the other hand, have not been found to be fully satisfactory since these known devices negatively affect the aesthetic design of the vehicle compartment and, moreover, they are scarcely reliable and frequently subjected to failures.

Yet another drawback of these known devices is that the controls thereof are frequency arranged very spaced from the driver place thereby the driver, for operating them, is diverted from the drive.

Thus, the main object of the present invention is to overcome the above mentioned drawbacks by providing a driving assembly for operating motor vehicle sun curtains which is adapted to provide a good sun shielding while providing a sufficient visibility, even with the motor vehicle in operation, without deforming the images received by the driver.

Another object of the present invention is to provide such a curtain driving assembly in which the sun curtain proper, that is the fabric material thereof, has a homogeneous aspect so as not to alter the inner aesthetics of the motor vehicle compartment.

Another object of the present invention is to provide such a sun curtain driving assembly the metal parts of which are suitably protected and the operation of which is very safe and reliable.

Yet another object of the present invention is to provide such a sun curtain driving assembly which can be easily installed in the motor vehicle compartment and which has an operation very comfortable and silent.

According to one aspect of the present invention, the above mentioned objects, as well as other objects, which will become more apparent hereinafter, are achieved by a driving assembly for driving sun curtains on a motor vehicle, characterized in that said driving assembly comprises at least a control element accessible for a motor vehicle driver and controlling an electric motor, including a revolution reducing unit provided with a worm aligned with the axis of the electric motor rotor and meshing with a worm gear, therewith there is rigidly provided a pignon meshing with two flexible racks adapted to slide in opposite directions and coupled at end portions thereof, to a rod associated with an edge of said curtain and slidably guided along a surface to be shielded.

## BRIEF DESCRIPTION OF THE DRAWINGS

Further characteristics and advantage of the invention will become more apparent from the following detailed disclosure of a preferred, though not exclusive embodiment thereof, which is illustrated, by way of an indicative but not limitative example, in the accompanying drawings, where:

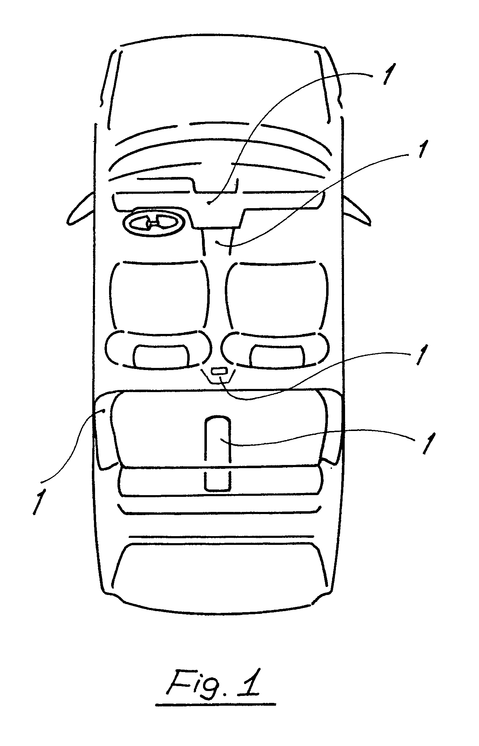

Figure 1 is a schematic top plan view of a motor vehicle and specifically shows possible regions where can be housed control push-buttons of a sun curtain driving assembly according to the invention;

Figure 2 shows a possible electric diagram of a circuit controlling an electric motor included in a sun curtain driving assembly according to the invention;

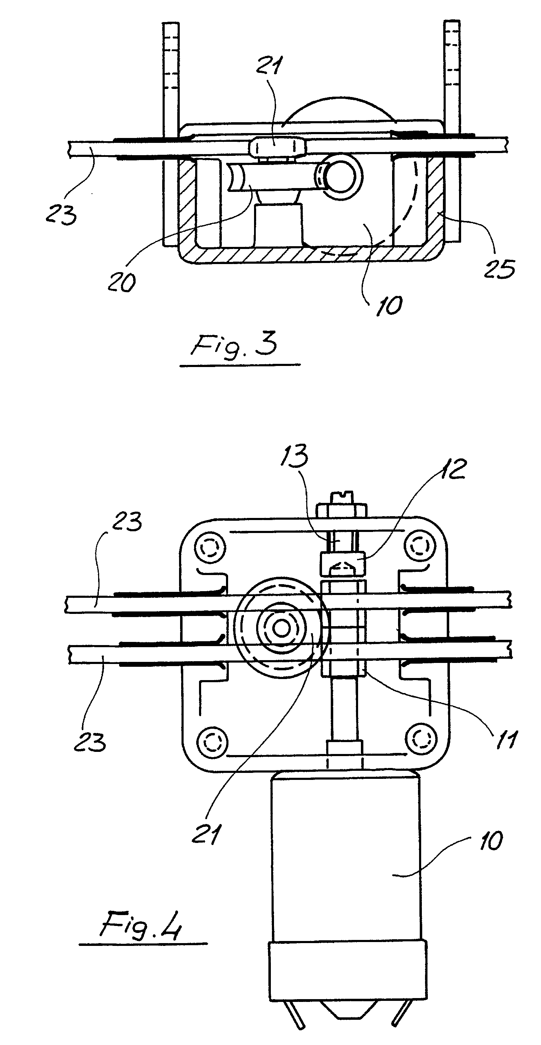

Figure 3 is a cross-sectional view showing a revolution reducing unit associated with the electric motor;

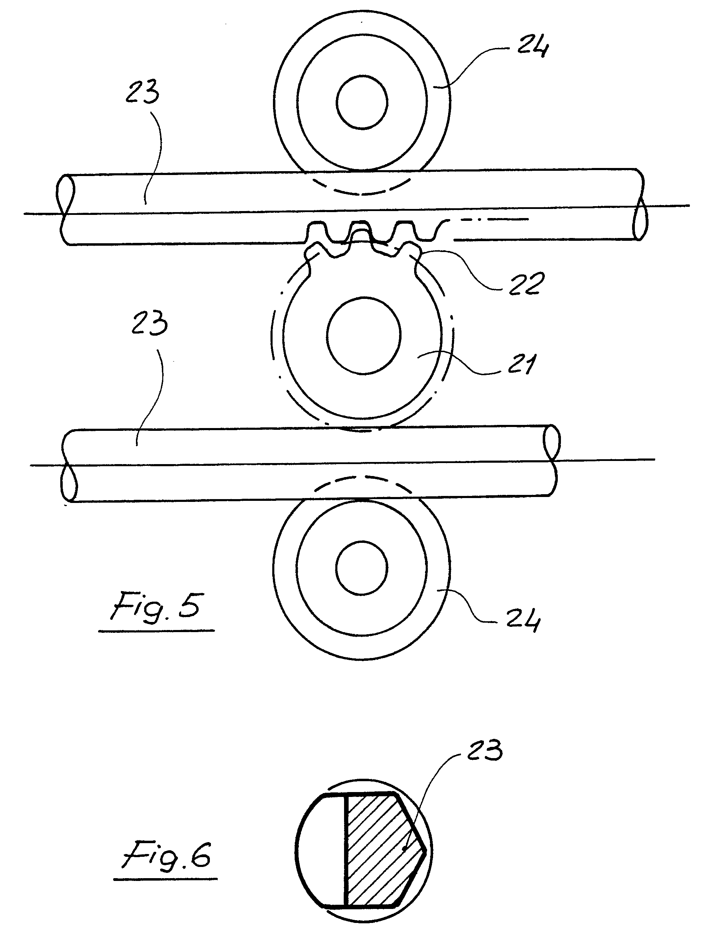

Figure 4 is a detail view of the electric motor and its revolution reducing unit;

Figure 5 is a schematic view, on an enlarged scale, showing the coupling between a pignon and flexible racks included in the driving assembly according to the invention;

Figure 6 is a cross-sectional view of the flexible racks;

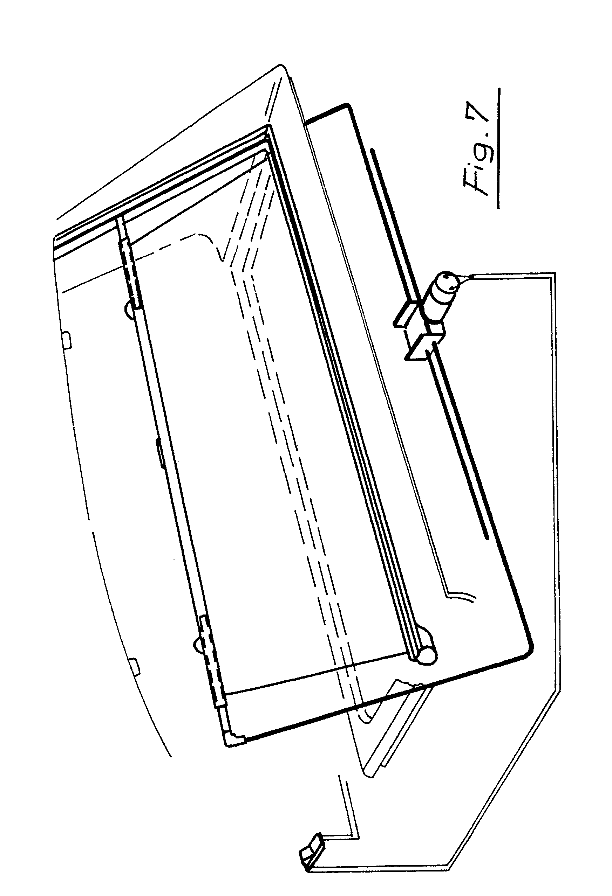

Figure 7 is a schematic view showing a possible assembling pattern for the subject sun curtain driving assembly;

Figure 8 is a partially exploded perspective view showing a rod coupled to the curtain fabric material and the flexible racks;

Figure 9 shows a cushioned limit of stroke element; and

Figure 10 is a cross-sectional view showing a band for coupling a rack holding sheaths to an upright covering guide member.

## DESCRIPTION OF THE PREFERRED EMBODIMENT

With reference to the figures of the accompanying drawings, the driving assembly for driving sun curtains of a motor vehicle according to the invention, comprises a control element which is overally indicated at the reference number 1.

This control element can comprises one or more push-buttons for operating the driving assembly with the motor vehicle either in a stop or in an operative condition.

In particular, the push button must be easily accessible for the driver and, accordingly, it will be arranged on the dashboard, near the steering wheel, or on the transmission tunnel ceiling or on the inner wall of the vehicle roof.

Moreover, this push-button can be duplicated, so as to provide a further push-button, of like function, which is easily accessible for the rear seat passengers; in this case the duplicate push-buttons will be arranged on the transmission tunnel ceiling, on the arm rest, on the rear backrest, on the rear door panels and so on.

The control can be designed in two different ways, that is: by a single pulse on the operating push-button, in which case a timing relay will be provided in the control circuit, or by a continuous pressing of the control push-button, which will be held for the overall stroke of the sun curtain.

A thermal switch can be also provided for protecting the driving electric motor.

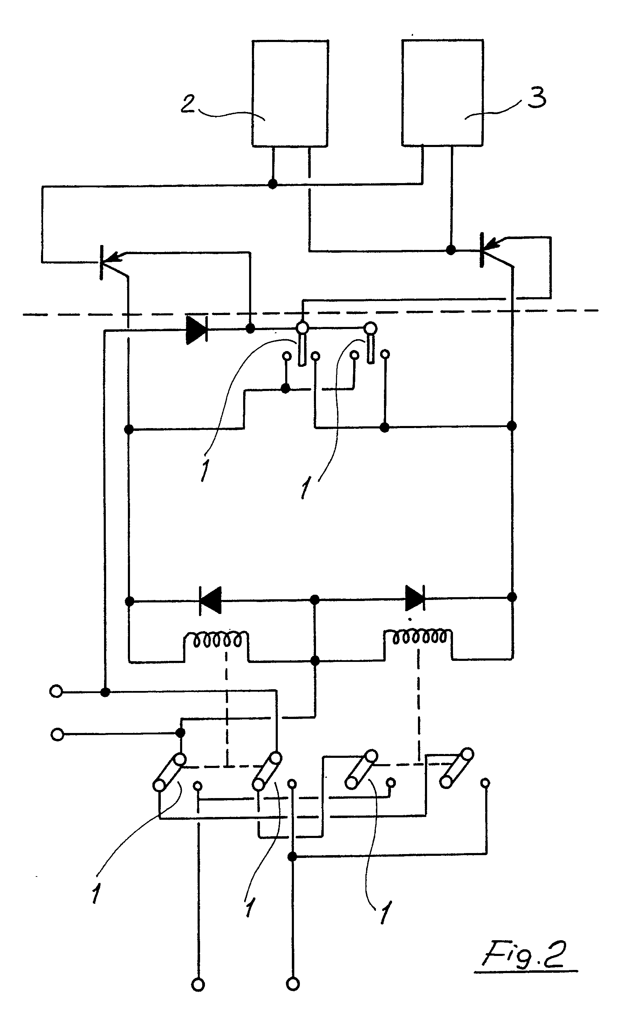

Moreover, it will be possible to provide for the use of an automatic type of control element, such as photocells, indicated at 2 in figure 2, or thermal sensors 3 adapted to automatically raise and lower the sun curtain.

The operations for lowering or raising the sun curtain, because of safety reasons, must be performed with a reduced time period of about five seconds; moreover, in the case of a failure of the driving system, a manual operation must be possible.

The control elements will control an electric motor, overally indicated at the reference number 10, which advantageously is a conventionally available electric motor selected based on use requirements, therewith there is associated a revolution reducing unit, comprising a worm 11 directly mounted in an aligned way with the axis of the motor rotor.

At one end of the worm 11 there is provided a tail block 12, associated with a micro metrically adjustable shaft 13; this adjustment, as it should be apparent, will be indispensable in order to provide proper sliding characteristics under load, also considering the fact that the worm will operate in different temperature conditions and under vibrations, even after long rest periods.

The tail block 12 is advantageously made of an autolubricating and antifriction material, so as to be compatible with the steel material of the shaft element forming the mentioned worm.

To the foregoing it is to be added that on the electrical motor there is provided a thermal switch, arranged on the motor winding which, practically, operates as a motor protecting element.

With the mentioned worm 11 a worm gear 20 is engaged through a suitable clearance coupling.

Axially aligned and rigid with the worm gear 20 there is provided a steel pignon 21 having a plurality of pignon teeth 22 and snugly operating two flexible racks 23 engaging on opposite portions of the pignon 21 and adapted to be caused to slide in opposite directions.

As clearly shown in figure 6, at the coupling region of the teeth 22 of the pignon 21 and the flexible rack 23, there are advantageously provided abutment elements 24, comprising abutment rollers, adapted to properly hold the driving engagement.

The thus disclosed assembly will be housed inside a housing 25, advantageously made of nylon-glass material and made by a thermo-injection making process; this housing will form the structural portion of the reducing unit and will operate as a casing for all of the driving elements.

A main feature of the present invention is that this housing is resiliently affixed to the motor vehicle body by suitable resilient linking elements so as to provide an effective vibration dampening.

As stated, the two flexible racks always engage with the pignon and, accordingly, the pignon and rack teeth must be designed for supporting the required load and for the intended useful life.

These racks will be preferably made starting from a thermoplastic material having autolubricating properties and so designed as to provide a good flexibility and sliding coefficient in the guide elements both during the pushing operation and in the sliding operation, at the reducing unit.

The racks, in particular, will be restrain ed within suitable sheaths, indicated at 30, which can be obviously be provided with bent portions.

It is accordingly very important that the elements which slide inside the sheaths 30 provide a very reduced friction.

The racks are made by a hot extrusion process with a specially designed cross-section which is homogeneous by shape, composition and compactness.

By exploiting the resiliency of the material, since the forming temperature is very near to the material softening temperature, immediately after the outlet of the material from the extruding machine, by pressing a steel gear element a continuous tooth pattern will be formed.

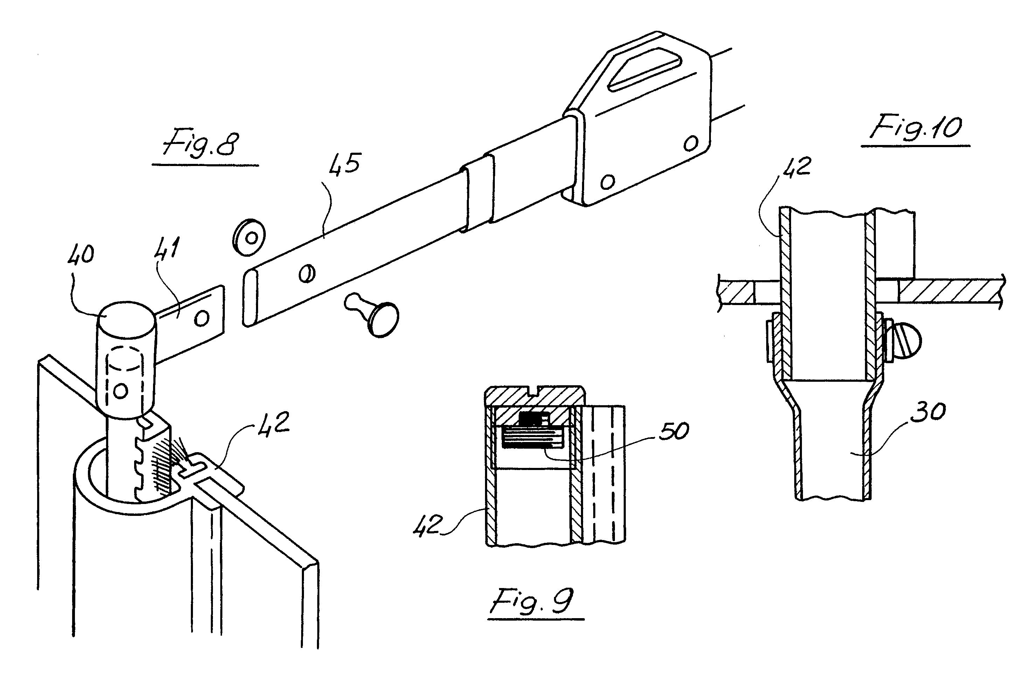

The flexible sheaths, at the operating ends thereof, as clearly shown in figure 8, are coupled to an end portion 40 affixed to the respective flexible rack and provided with a pad 41 adapted to slide in the upright 42 arranged near the region of the sun curtain and operating as a slide guide.

The pad 41 engages with a rod 45 which has a curved shape so as to properly adhere to the top profile of the rear window, and has a tubular type of cross-section, preferably of oval shape.

The rod coupling pads, as stated, slide in their upright guides which follow the profile of the rear upright covers, arranged on the sides of the rear window.

The guides, which are provided with protecting gaskets at the open pad sliding region and project from the space under the rear window toward the luggage van, can be arranged as cantilever elements or embedded in the upright covering elements.

At the top end portions of the guide there are provided shock absorbing elements, indicated at 50, and made of resilient pads or the like elements adapted to operate as cushioned end of stroke elements for the pushing members.

At the bottom end, where the sheath holding the flexible rack is coupled to the upright guide, it is possible to provide other end of stroke cushioned elements.

With the disclosed arrangement, the transmission will be of a type rigid with the pushing rotor, that is there are not possible slips or stroke losses because of friction effects and, because of this reason, the racks can also have differ ent paths, with the great advantage that the driving assembly can be mounted at different positions, that is at different distances so as to provide a hidden driving assembly.

In the case of a motor vehicle, the revolution reducing unit can be arranged in any suitable region of the rear of the compartment for example under the upright or in the rear well or in the spare wheel compartment.

From the above disclosure it should be apparent that the invention fully achieves the intended objects.

While the inventon has been disclosed and illustrated with reference to preferred embodiments thereof, it should be apparent that the disclosed embodiments are susceptible to several modifications and variations all of which will come within the scope and spirit of the appended claims.

## Claims

1. A driving assembly for driving sun curtains on a motor vehicle, characterized in that said driving assembly comprises at least a control element accessible for a motor vehicle driver and controlling an electric motor, including a revolution reducing unit provided with a worm aligned with the axis of the electric motor rotor and meshing with a worm gear, therewith there is rigidly provided a pignon meshing with two flexible racks adapted to slide in opposite direction and coupled at end portions thereof, to a rod associated with an edge of said curtain and slidably guided along a surface to be shielded.

2. A driving assembly according to claim 1, wherein said control element comprises at least a push-button arranged on a dash-board or near a steering wheel or on a transmission tunnel ceiling or on a roof of said motor vehicle.

3. A driving assembly, according to claim 1, wherein said driving assembly comprises at least a pair of control push-buttons.

4. A driving assembly, according to claim 1, wherein said control element comprises automatic controls including photocells or thermal sensors driving said electric motor.

5. A driving assembly according to claim 1, wherein said assembly comprises a thermal switch arranged on the winding of said motor.

6. A driving assembly according to claim 1, wherein said assembly comprises a tail block engaging with one end of said worm, said tail block being supported by a micrometrically adjustable shaft.

7. A driving assembly according to claim 1, wherein said assembly comprises a housing for holding said motor and said driving assembly elements.

8. A driving assembly according to claim 1, wherein said flexible racks are made of a thermoplastic material.

9. A driving assembly according to claim 1, wherein said assembly comprises abutment elements engaging with said flexible racks on an opposite side from said pignon.

10. A driving assembly according to claim 1, wherein said flexible racks, at an operating portion thereof, are coupled with end portions provided with pads for engaging said rod, said pad being adapted to slide along a guide upright.

11. A driving assembly according to claim 1, wherein said assembly comprises holding sheaths for holding and guiding said flexible racks, said sheaths being coupled to said guide uprights.

12. A driving assembly according to claim 1, wherein said rod has a shape which substantially mates with a top profile of a rear window.

13. A driving assembly according to claim 1, wherein said rod has an oval cross-section shape.

14. A driving assembly according to claim 1, wherein said guide uprights are provided with sealing gaskets adapted to be coupled with said pad.

_Fig. 1_

Fig.2

21

23

20

10

25

Fig. 3

13

12

23

23

21

11

10

Fig. 4

_Fig.5_

_Fig.6_

Fig.7

*Fig.8*

*Fig.10*

*Fig.9*

45

40

41

42

42

50

42

30

EP 0 424 328 A2